# EUROPÄISCHE PATENTSCHRIFT

(11) **EP 2 021 981 B1**
(45) Veröffentlichungstag und Bekanntmachung des Hinweises auf die Patenterteilung: **29.12.2010**
(21) Anmeldenummer: 07722212.3
(22) Anmeldetag: 14.04.2007
(51) Int. Cl.: G06K 13/07, G06K 13/103, G06K 17/00

(54) **MULTIFUNKTIONALES PERSONALISIERUNGSSYTEM**
MULTIFUNCTIONAL PERSONALIZATION SYSTEM
SYSTÈME DE PERSONNALISATION MULTIFONCTIONNEL

(30) Priorität: 17.05.2006 DE 102006023008
(43) Veröffentlichungstag der Anmeldung: 11.02.2009
(73) Patentinhaber: Mühlbauer AG, 93428 Roding (DE)
(72) Erfinder: BURKHARDT, Bertram, 93413 Cham (DE)
(74) Vertreter: Glück, Martin
(86) Internationale Anmeldenummer: PCT/DE2007/000654
(87) Internationale Veröffentlichungsnummer: WO 2007/131465

(56) Entgegenhaltungen:
- EP-A1- 0 256 921
- EP-A2- 0 863 482

## Beschreibung

Die Erfindung betrifft ein multifunktionales Personalisierungssystem gemäß dem Oberbegriff des Patentanspruches 1.

Aus der DE 20 2005 012 928 U1 ist ein portables Personalisierungsgerät zum Beschriften von Datenträgerelementen, beispielsweise von Identifikations- und Zugangskarten mittels einer integrierten Lasereinheit bekannt, bei der mit Hilfe der integrierten Lasereinheit eine Beschriftung- auch unterhalb einer Oberflächen abdeckenden Kunststofffolie des Datenträgerelementes - durchgeführt wird. Das beschriebene portable Personalisierungsgerät ist somit zum Beschriften von unterschiedliche Abmessungen aufweisenden Datenträgerelementen ausgebildet und weist hierzu eine auswechselbare Kassetteneinheit auf, welche zur Aufnahme und Fixierung zumindest eines Datenträgerelementes spezifischer Form und Typs ausgebildet ist. Zur Beschriftung von unterschiedlichen Datenträgerelementen ist es somit erforderlich, die zur Aufnahme des speziellen Datenträgerelementes ausgebildete Kassetteneinheit in das portable Personalisierungsgerät einzusetzen. Das portable Personalisierungsgerät ist in einer Ausführungsform modulartig aufgebaut, d.h. weist ein Grundgestellmodul auf, in welches ein Elektronikmodul, ein Steuermodul und ein in Form einer Lasereinheit ausgebildetes Bearbeitungsmodul einsetzbar sind.

Ferner ist eine modulare Bearbeitungsanlage zur Bearbeitung von Personalisierungselementen, insbesondere von Chip-Karten, Smart-Cards oder Magnetstreifen-Karten mit einer Mehrzahl von linear hintereinander angeordneter Bearbeitungsmodulen aus der DE 103 50 488 A1 bekannt. Die Bearbeitungsmodule weisen jeweils mindestens ein erstes und zweites Untermodul auf, wobei jeweils das erste Untermodul als Prozessmodul in einem Bearbeitungsbereich oberhalb einer gemeinsamen Tischplattenebene eines Anlagengrundgestells und das zweite Untermodul als Elektronik- und Prozesskomponentenmodul in einem Steuerungs- und Auswertebereich unterhalb der Tischplattenebene angeordnet sind. Die modulare Bearbeitungsanlage weist somit mehrere unterschiedliche Prozessmodule zur Personalisierung von Identifikations- und Zugangselementen auf. Die Identifikationsund Zugangselemente werden hierbei seriell und in einer Förderrichtung den Prozessmodulen zugeführt. Nachteilig ist eine Anpassung des Funktionsumfangs der modularen Bearbeitungsanlage, beispielsweise die Aufnahme eines zusätzlichen Personalisierungsprozesses zwischen zwei bereits integrierten Bearbeitungsmodulen mit einem hohen Umbauaufwand verbunden. Auch können die einzelnen Personalisierungsprozesse nur in der vorgegeben Reihenfolge, und zwar nacheinander durchgeführt werden, d.h. ein Wechsel der Reihenfolge der Personalisierungsprozesse sowie eine mehrfache Zuführung eines Identifikations- und Zugangselementes an ein bestimmtes Prozessmodul ist mit der beschriebenen modularen Bearbeitungsanlage nicht möglich.

Aus der EP 0 256 921 A1 ist eine Vorrichtung zur Personifizierung von Karten bekannt ist, welche eine Einrichtung zur Bearbeitung der Karten mit mehreren Personifizierungseinheiten umfasst. Die Einrichtung ist mit einer Steuereinheit verbunden, welche die Personifizierungsoperationen steuert. Die Vorrichtung umfasst ferner einen Manipulationsautomaten bestehend aus einem Zuführmagazin, einem Empfängermagazin, einem Ausschussmagazin und einer Greifeinrichtung. Der Manipulationsautomat weist eine Einrichtung zum Verschieben auf einer ersten Achse in beiden Richtungen auf, und zwar derart, dass jeweils vor einer Personifizierungseinheit die Verschiebeeinrichtung zum Halten kommt und an der Verschiebeeinrichtung eine Greifeinrichtung derart gelagert ist, dass eine Bewegung der Greifeinrichtung entlang einer senkrecht zur ersten Achse verlaufenden zweiten Achse bewegbar ist.

Ausgehend vom dem genannten Stand der Technik liegt der vorliegenden Erfindung die Aufgabe zugrunde, ein multifunktionales Personalisierungssystem zum Personalisieren von Identifikations- bzw. Zugangselementen zur Verfügung zu stellen, dass individuell an unterschiedlichste Personalisierungsanforderungen anpassbar ist sowie eine einfache, zentrale Bedienung ermöglicht.

Die Aufgabe wird ausgehend vom Oberbegriff des unabhängigen Patentanspruches 1 durch dessen kennzeichnende Merkmale gelöst.

Besonders vorteilhaft sind die Prozessmodule beidseitig entlang der Kartentransporteinheit angeordnet und die Kartentransporteinheit ist zur ein- und/oder mehrfachen Zuführung zumindest eines Identifikations- bzw. Zugangselementes an einzelne Prozessmodule ausgebildet, wobei die Reihenfolge der Zuführung des Identifikations- bzw. Zugangselementes an die einzelnen Prozessmodule unabhängig von der Anordnung der Prozessmodule entlang der Kartentransporteinheit erfolgt. Mittels der zentral im multifunktionalen Personalisierungssystem angeordneten Kartentransporteinheit sind die unterschiedlichen Prozessmodule in nahezu beliebiger Reihenfolge und ggf. auch mehrmals anfahrbar, d.h. die Zuführung der Identifikations- bzw. Zugangselemente ist individuell an die Personalisierungsanforderungen anpassbar.

Weiterhin ist die Reihefolge der Zuführung an alle oder beliebig ausgewählte Prozessmodule individuell steuerbar. Hierzu ist die Kartentransporteinheit zur linearen Förderung des vereinzelten Identifikations- bzw. Zugangselementes entlang einer Transportachse in einer ersten Förderrichtung und in einer entgegengesetzt zur ersten Förderrichtung gerichteten zweiten Förderrichtung ausgebildet.

Weiterhin vorteilhaft weist die Kartentransporteinheit eine Wendeeinrichtung zum Wenden des vereinzelten Identifikations- bzw. Zugangselementes auf. Durch das Vorsehen einer Wendeeinrichtung kann sowohl die Rückseite als auch die Vorderseite des Kartenelementes unabhängig von der Anordnung und Ausrichtung der Prozessmodule unterschiedlichen Personalisierungsprozessen unterzogen werden.

Die Prozessmodule sind entlang der Kartentransporteinheit und parallel zur Transportachse in einer Bearbeitungsebene angeordnet, wobei die Kartentransporteinheit ein Transportband mit einem Transportschlittenelement zur Aufnahme des Identifikations- bzw. Zugangselementes aufweist.

In einer vorteilhaften Ausbildung weist die Kartentransporteinheit zumindest eine Servomotoreneinheit zum Antrieb des Transportbandes und der Wendeeinrichtung auf, wodurch beispielsweise eine getaktete Zuführung des vereinzelten Identifikations- bzw. Zugangselementes an die Prozessmodule realisierbar ist.

Besonders vorteilhaft ist das multifunktionale Personalisierungssystem in ein Tischgehäusemodul mit einem Innenraum integriert, der durch die Kartentransporteinheit in einen ersten und zweiten Aufnahmeraum zur Aufnahme der Prozessmodule aufgeteilt ist. Die Prozessmodule sind jeweils parallel zur Transportachse im ersten und zweiten Aufnahmeraum des Tischgehäusemoduls in nahezu beliebiger Reihenfolge und Anordnung modulartig einsetzbar, wodurch der Funktionsumfang des multifunktionalen Personalisierungssystems ggf. auch nachträglich benutzerindividuell anpassbar ist. Das multifunktionale Personalisierungssystem bildet durch die Integration sämtlicher für die Durchführung und Steuerung der unterschiedlichen Personalisierungs- und Kontrollprozesse erforderlichen Einheiten in einem Tischgerät ein individuell konfigurierbares Stand-Alone-System aus.

Besonders vorteilhaft sind in dem zumindest einen Aufnahmeraum Führungs- und/oder Fixierelemente zur Befestigung der Prozessmodule vorgesehen, die zu an den Prozessmodulen vorgesehenen Anschlussetementen kompatibel sind.

Weitere vorteilhafte Weiterbildungen der Erfindung sind Gegenstand der abhängigen Ansprüche.

Die Erfindung wird anhand ausgewählter Ausführungsbeispiele mittels Zeichnungen näher beschrieben. Es zeigen:
- Fig. 1: beispielhaft eine perspektivische Darstellung des multifunktionalen Personalisierungssystems,

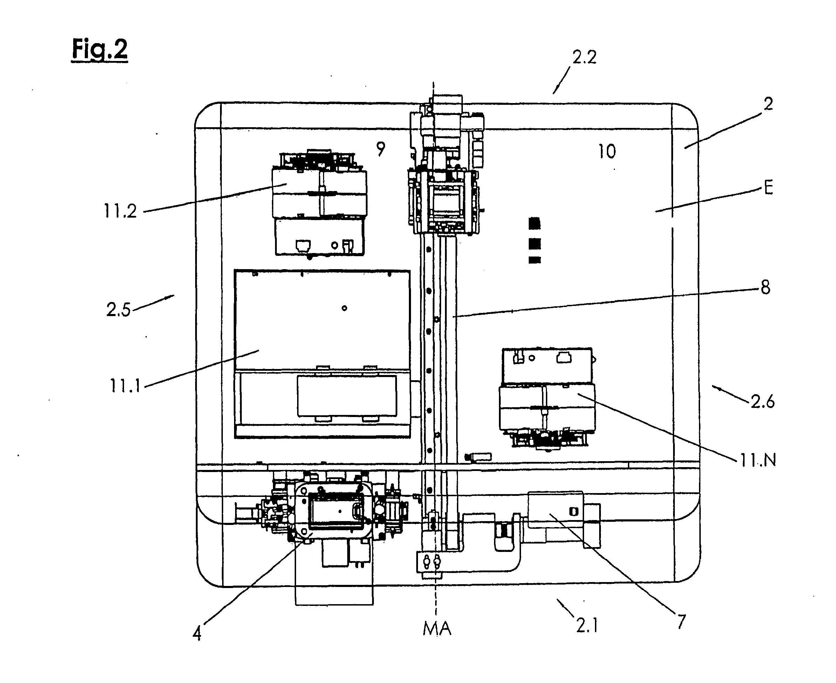

- Fig. 2: beispielhaft eine Draufsicht auf das geöffnete Tischgehäusemodul gemäß Fig. 1,
- Fig. 3: beispielhaft eine Seitenansicht des geschlossenen Tischgehäusemoduls,
- Fig. 4: beispielhaft eine weitere perspektivische Darstellung des multifunktionalen Personalisierungssystems gemäß Fig. 1,

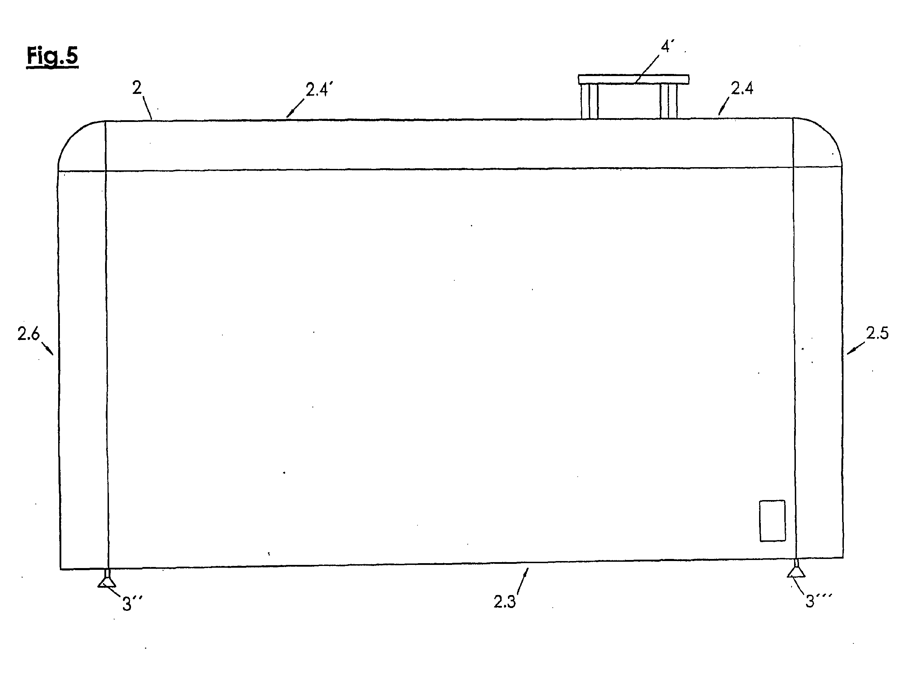

- Fig. 5: beispielhaft eine Rückansicht des geschlossenen Tischgehäusemoduls und
- Fig. 6: beispielhaft eine perspektivische Darstellung der im Tischsgehäusemodul integrierten zentralen Kartentransporteinheit.

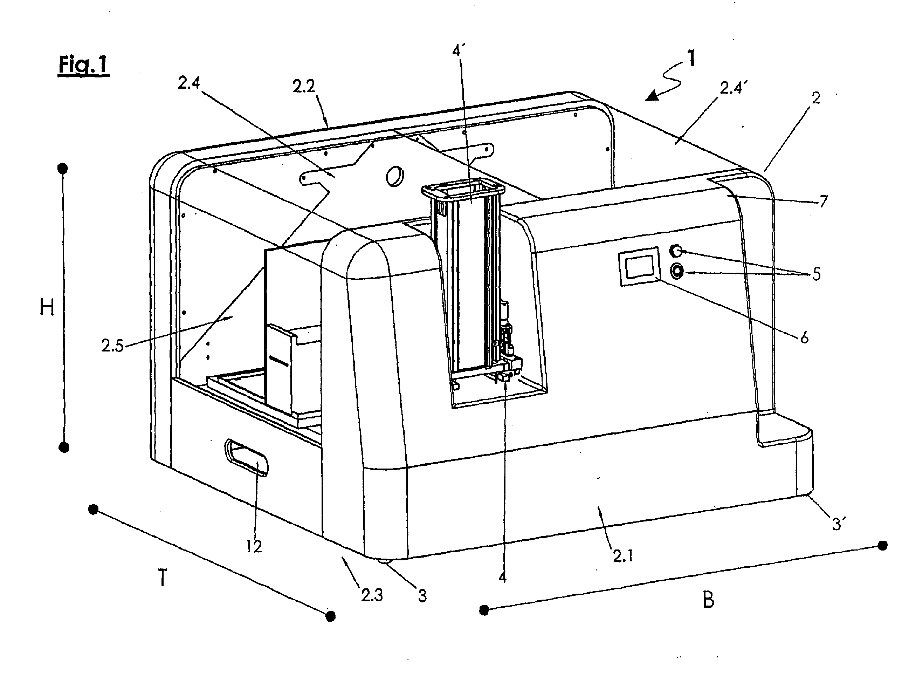

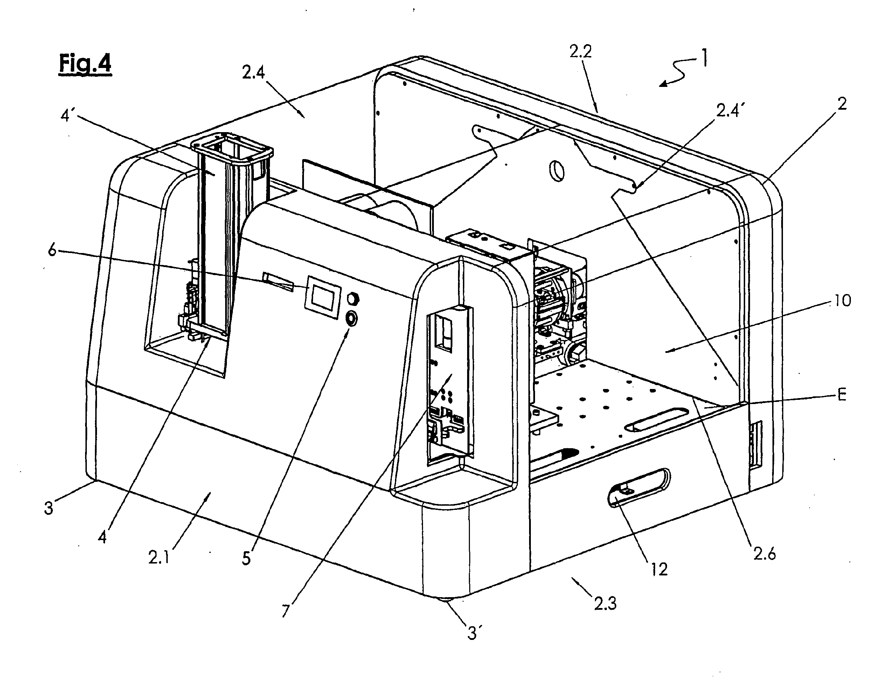

In den Figuren 1 und 4 ist beispielhaft in jeweils einer perspektivischen Darstellung ein multifunktionales Personalisierungssystem 1 dargestellt, welches in einem Tischgehäusemodul 2 integriert ist. Das Tischgehäusemodul 2 weist einen Gehäusefrontbereich 2.1 und einen Gehäuserückenbereich 2.2 auf, die über zumindest einen Gehäusebodenbereich 2.3 miteinander verbunden sind.

Zur Ausbildung eines geschlossenen Tischgehäusemoduls 2 sind der Gehäusefrontbereich 2.1 und der Gehäuserückenbereich 2.2 über zumindest ein Gehäusedeckelelement 2.4 zusätzlich miteinander verbindbar. Das Gehäusedeckelelement 2.4 ist in einer bevorzugten Ausführungsform zweiteilig ausgebildet, d.h. weist zwei getrennt voneinander betätigbare Gehäusedeckelelemente 2.4, 2.4' auf.

Ferner weisen die Gehäusedeckelelemente 2.4, 2.4' in einer bevorzugten Ausführungsform einen L-förmigen Querschnitt auf, so dass diese die beiden Gehäuseseitenbereiche 2.5, 2.6 des Tischgehäusemoduls 2 ebenfalls mit verschließen. Im geschlossenen Zustand bildet das Tischgehäusemodul 2 beispielsweise ein würfelförmiges oder quaderförmiges Gehäuse aus.

Im Bereich der Ecken des vorzugsweise rechteckförmig ausgebildeten Gehäusebodenbereiches 2.3 sind vom Tischgehäusemodul 2 nach unten wegstehende Standbeine 3, 3', 3", 3"' vorgesehen, welche vorzugsweise senkrecht zum Gehäusebodenbereich 2.3 angeordnet sind. Die Standbeine 3, 3', 3", 3"' sind zur Positionierung und Ausrichtung des auf einem festen Untergrund, beispielsweise einer Tischplatte angeordneten Tischgehäusemoduls 2 vorgesehen. Beispielsweise ist mit Hilfe der Standbeine 3, 3', 3", 3"' der Abstand des Gehäusebodenbereiches 2.3 zur Tischplatte variierbar.

Im Gehäusefrontbereich 2.1 des Tischgehäusemoduls 2 ist beispielhaft eine Kartenaufnahmeeinheit 4 zur Aufnahme der zu personalisierenden Identifikations- bzw. Zugangselemente, insbesondere von kontaktlosen oder kontaktbehafteten Kartenelementen wie Chip-Karten, Smart-Cards und/oder Magnetstreifen-Karten vorgesehen, welche beispielsweise ein Magazin- bzw. Kassettenmodul 4' zur Aufnahme einer Vielzahl von Kartenelementen aufweist. Zur Vereinzelung der im Magazin- bzw. Kassettenmodul 4' befindlichen Identifikations- bzw. Zugangselemente ist im Tischgehäusemodul 2 oder in der Kartenaufnahmeeinheit 4 ein Kartenvereinzelungsmodul vorgesehen. Die personalisierten Identifikations- bzw. Zugangselemente werden über eine im Gehäusefrontbereich 2.1 vorgesehene Kartenausgabeeinheit 7 ausgegeben. In einer bevorzugten Ausführungsform weist die Kartenausgabeeinheit 7 einen Ausgabeschacht mit Gut-/Schlechtkartensortierung auf.

Zwischen der Kartenaufnahmeeinheit 4 und der Kartenausgabeeinheit 7 ist zum Transport der bereits vereinzelten Identifikations- bzw. Zugangselemente bzw. Kartenelemente entlang einer Transportachse TA eine Kartentransporteinheit 8 vorgesehen, die vorzugsweise zentral im multifunktionalen Personalisierungssystem angeordnet ist. Mit Hilfe der Kartentransporteinheit 8 können die vereinzelten Identifikations- bzw. Zugangselemente bzw. Kartenelemente entlang der Transportachse TA in einer ersten Förderrichtung FR1 und in einer entgegengesetzt zur ersten Förderrichtung FR1 verlaufenden zweiten Förderrichtung FR2 transportiert werden, und zwar in einer Bearbeitungsebene E. Die erste und zweite Förderrichtung FR1, FR2 verlaufen parallel zur Transportachse TA.

Der Innenraum 2' des Tischgehäusemoduls 2 wird durch die Kartentransporteinheit 8 in einen ersten und zweiten Aufnahmeraum 9, 10 aufgeteilt, der sich beispielsweise zwischen dem Gehäusefrontbereich 2.1 und dem Gehäuserückenbereich 2.2 erstreckt und bei geöffneten oder abgenommenen Gehäusedeckelelement 2.4, 2.4' von oben und/oder seitlich frei zugänglich ist. Der erste und zweite Aufnahmeraum 9, 10 sind insbesondere zur Aufnahme eines ersten bis N-ten Prozessmoduls 11.1 - 11.N vorgesehen, welche jeweils zur Durchführung zumindest eines Personalisierungsund/oder Kontrollprozesses, beispielsweise Beschriften des Kartenelementes oder Kodieren des im Kartenelement vorgesehenen Chipelementes bzw. Magnetstreifenelementes etc. ausgebildet sind. Beispielsweise können das erste bis N-te Prozessmodul 11.1 - 11.N als Magnetstreifen-Codier-Modul, Thermotransferdruckermodul, Chip-Codiermodul, Dye-Sublimationsdruckmodul, Lasermodul, Laminiermodul, optisches Verifikationsmodul oder als ein eine Kombination der genannten Personalisierungs- und Kontrollfunktionen aufweisendes Modul realisiert sein. Die ersten bis N-ten Prozessmodule 11.1 -11.N sind parallel zur Transportachse TA ebenfalls in der Bearbeitungsebene E angeordnet.

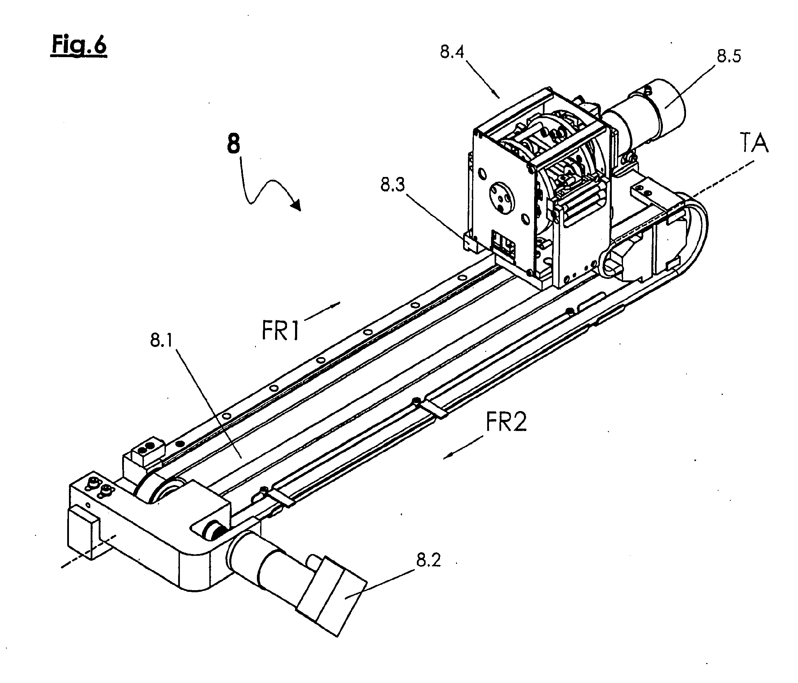

In einer bevorzugten Ausführungsform gemäß Figur 6 weist die Kartentransporteinheit 8 ein Transportband 8.1 auf, welches auf zwei jeweils an den Stirnseiten der Kartentransporteinheit 8 angeordneten Rolleneinheiten geführt wird. Zum Antrieb des Transportbandes 8.1 ist zumindest eine der Rolleneinheiten mit einer Servomotoreinheit 8.2 verbunden, mittels der das Transportband 8.1 in erster und zweiter Förderrichtung FR1, FR2 antreibbar ist.

Ferner ist das Transportband 8.1 mit einem Transportschlittenelement 8.3 versehen, welches zur Aufnahme des vereinzelten Identifikations- bzw. Zugangselementes ausgebildet ist. Auf dem Transportschlittenelement 8. 3 ist zum Wenden des Identifikations- bzw. Zugangselementes eine Wendeeinrichtung 8.4 angebracht, mittels der eine Personalisierung und/oder Kontrolle der Vorder- und Rückseite des Identifikations- bzw. Zugangselementes in einer nahezu beliebigen Reihenfolge durch die ersten bis N-ten Prozessmodule 11.1 - 11.N möglich wird. Zum Antrieb der Wendeeinrichtung 8.4 ist beispielsweise eine weitere Servomotoreinheit 8.5 vorgesehen.

Über die Kartentransporteinheit 8 ist somit eine ein- und/oder mehrfache Zuführung des Identifikations- bzw. Zugangselementes an die unterschiedlichen Prozessmodule 11.1 -11.N möglich, wobei die Reihenfolge der Zuführung des Identifikations- bzw. Zugangselementes an die einzelnen Prozessmodule 11.1 -11.N unabhängig von der Anordnung der Prozessmodule 11.1 -11.N entlang der Kartentransporteinheit 8 ist. Auch kann die Kartentransporteinheit 8 zur getakteten Zuführung des vereinzelten Identifikations- bzw. Zugangselementes an die einzelnen Prozessmodule 11.1 -11.N ausgebildet sein.

Ferner weisen der erste und zweite Aufnahmeraum 9, 10 in einer bevorzugten Ausführungsform spezielle Führungs- und/oder Fixierelemente zur Befestigung der Prozessmodule 11.1 - 11.N auf, welche in der Bearbeitungsebene E und/oder entlang der zentralen Kartentransporteinheit 8 angeordnet sind. Beispielweise können die Führungs- und/oder Fixierelemente als Rastelemente ausgebildet sein, in welche die Prozessmodule 11.1 - 11.N jeweils eingesetzt werden. Die Prozessmodule 11.1 - 11.N weisen hierzu Anschlusselemente auf, welche mit den im ersten und zweiten Aufnahmeraum 9, 10 angeordneten Führungs- und/oder Fixierelementen kompatibel sind.

Im Folgenden wird die Funktionsweise des multifunktionalen Personalisierungssystems 1 für ein als Kartenelement ausgebildetes Identifikations- bzw. Zugangselement beispielhaft beschrieben. Das von der Kartenaufnahmeeinheit 4 vereinzelt abgegebene Kartenelement wird über die zentrale Kartentransporteinheit 8 aufgenommen, und zwar von der auf dem Transportschlittenelement 8. 3 angeordneten Wendeeinrichtung 8.4. Anschließend wird das Transportschlittenelement 8. 3 in erster Förderrichtung FR1 zu einem ersten Prozessmodul 11.1 gefördert. Vom Transportschlittenelement 8. 3 wird das Kartenelement an das erste Prozessmodul 11.1 übergeben und dieses einem ersten Personalisierungsprozess unterzogen. Im Anschluss daran wird das zumindest teilweise personalisierte Kartenelement von dem ersten Prozessmodul 11.1 an das Transportschlittenelement 8. 3 bzw. die Wendeeinrichtung 8.4 der Kartentransporteinheit 8 übergeben und wiederum in erster Förderrichtung FR1 dem zweiten Prozessmodul 11.2 zugeführt. Durch das zweite Prozessmodul 11.2 wird wiederum das Kartenelement aufgenommen und ein zweiter Personalisierungsprozess durchgeführt. Analog hierzu wird die Personalisierung des Kartenelementes fortgesetzt bis sämtliche individuell vorgegebenen Personalisierungsprozesse mittels der weiteren Prozessmodule 11.3 -11.N durchgeführt worden sind.

Die zur Personalisierung und/oder Kontrolle des Kartenelementes vorgesehenen Prozessmodule 11.1 -11.N sind individuell auswählbar sowie die Reihenfolge der Durchführung der Personalisierungs- und/oder Kontrollprozesse nahezu beliebig steuerbar. Somit können über die zentrale Kartentransporteinheit 8 ausgewählte Prozessmodule 11.1 -11.N auch mehrfach angefahren werden, beispielsweise nach erfolgter Personalisierung der Rückseite des Kartenelementes kann die Vorderseite des Kartenelementes mittels desselben oder eines unterschiedlichen Prozessmoduls 11.1 - 11.N bearbeitet werden. Nach abgeschlossener Personalisierung und/oder Kontrolle des Kartenelementes wird dieses über die zentrale Kartentransporteinheit 8 der Kartenausgabeeinheit 7 zugeführt und an dieses übergeben. Ggf. ist ein Gut- und Schlechtkartensortierungsmodul im Tischgehäusemodul 2 oder in der Kartenausgabeeinheit 7 vorgesehen, über welche diejenigen Kartenelemente aussortiert werden, welche einen vorgegebenen Qualitätsstandard nicht erfüllen bzw. fehlerhaft sind.

In das Tischgehäusemodul 2 können bis zu N Personalisierungs- und/oder Kontrollprozesse modulartig integriert werden und dadurch der Funktionsumfang bzw. Personalisierungsumfang des Personalisierungssystems 1 individuell angepasst werden. Das in das Tischgehäusemodul 2 integrierte Personalisierungssystems 1 bildet somit eine multifunktionale, modular aufgebaute Personalisierungs-Plattform aus, welche eine einfache, autarke und professionelle Personalisierung von Identifikations- bzw. Zugangselementen ermöglicht.

Das multifunktionale Personalisierungssystem 1 kann zunächst in einer Grundausbaustufe mit beispielsweise zwei Prozessmodulen 11.1, 11.2 bestückt sein und zu einem späteren Zeitpunkt durch Aufnahme weiterer zusätzlicher Prozessmodule schrittweise bis zu einer Vollausbaustufe erweitert werden. Das Tischgehäusemodul 2 weist bei einem Ausbau mit N = 7 unterschiedlichen Prozessmodulen 11.1 -11.N beispielsweise eine Breite B von 700 - 900 mm, vorzugsweise 800 mm, eine Tiefe T von 700 - 900 mm, vorzugsweise 800 mm sowie eine Höhe H von 400 - 600 mm, vorzugsweise 500 mm auf.

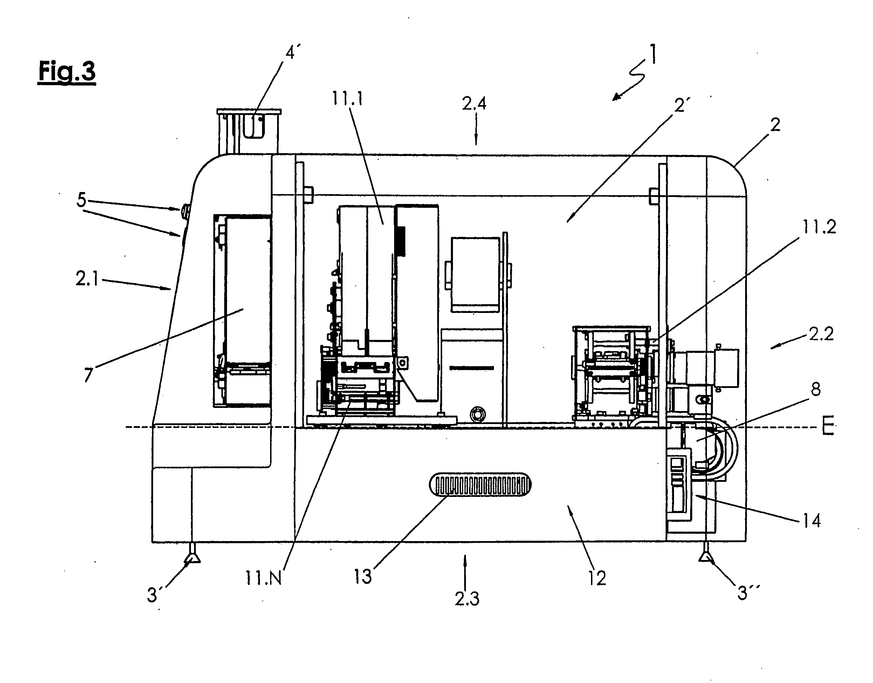

Ferner ist gemäß Figur 3 im Gehäusebodenbereich 2.3 des Trägergehäusemoduls 2 und unterhalb der Bearbeitungsebene E ein Steuer- und Auswerteraum 12 vorgesehen, in dem zumindest eine Steuereinheit 13 mit ggf. einer Speichereinheit angeordnet ist. Die Steuereinheit 13 ist beispielsweise als Personal Computer Einheit ausgebildet und zur Steuerung der Kartentransporteinheit 8 und somit des Kartenelementhandlings vorgesehen. Beispielsweise werden ebenfalls mittels einer in der Steuereinheit 13 ausgeführten Steuerroutine sämtliche zur Ansteuerung der im ersten und zweiten Aufnahmebereich 9, 10 angeordneten Prozessmodule 11.1 - 11.N erforderlichen Steuersignale erzeugt und an das jeweilige Prozessmodul 11.1 - 11.N über Steuerleitungen und/oder ein internes Bussystem übertragen. Auch können zur Kontrolle der korrekten Ausführung der unterschiedlichen Personalisierungsprozesse über die Steuerleitungen und/oder das interne Bussystem Messdaten an die Steuereinheit 13 übertragen werden, welche anschließend beispielsweise mittels einer ebenfalls in der Steuereinheit 13 ausgeführten Auswerteroutine ausgewertet werden.

In einer bevorzugten Ausführungsform sind zum Anschluss der einzelnen Prozessmodule 11.1 bis 11.N an die Steuereinheit 13 im Tischgehäusemodul 2 proprietäre oder standardisierte Datenübertragungsschnittstellen vorgesehen, die über entsprechende Schnittstellenanschlüsse im ersten und zweiten Aufnahmeraum 9 und 10 verfügen. Als Datenübertragungsschnittstelle können beispielsweise eine TCP/IP ("Transmission Control Protocol over Internet Protocol") oder eine SCSI ("Small Computer System Interface") Schnittstelle vorgesehen sein.

Beispielsweise kann die Steuereinheit 13 zur Ein- und Ausgabe von Daten unterschiedliche Ein- und Ausgabeeinheiten sowie Anschlusseinheiten 14 aufweisen. Die manuelle Konfiguration der Steuereinheit 13 und/oder die Bedienung der in der Steuereinheit 13 ausgeführten Steuer- und Auswerteroutine kann beispielsweise über eine Tastatureinheit und/oder eine zugeordnete Monitoreinheit gesteuert werden. Die zur Personalisierung der Identifikations- und Zugangselemente erforderlichen Personalisierungsdaten werden beispielsweise in der Speichereinheit gespeichert und während des Personalisierungsprozesses über der Steuerroutine an das jeweilige Prozessmodul 11.1 - 11.7 gesteuert.

Auch ist der Anschluss des multifunktionalen Personalisierungssystems 1 über die Anschlusseinheiten 14 an ein Rechner-Netzwerk möglich. Das multifunktionale Personalisierungssystem 1 ist hierzu als Stand-Alone-System ausgebildet, welches über die Anschlusseinheiten 14 über eine entfernt vom Personalisierungssystem 1 angeordnete Rechnereinheit ansteuerbar ist.

Ferner ist im Gehäusefrontbereich 2.1 zumindest ein Bedienungsmodul 5 und/oder eine Anzeigeeinheit 6 vorgesehen, mittels der beispielsweise die zur Personalisierung vorgesehene Steuerroutine überwacht und/oder der aktuelle Status der Personalisierung angezeigt wird.

In einer bevorzugten Ausführungsform können mehrere unterschiedliche Steuerund/oder Auswerteroutinen vorgesehen sein, welche benutzerindividuell ausgewählt werden können. Beispielsweise kann die Anzahl, der Typ und/oder die Reihenfolge der Personalisierungsschritte durch die jeweilige Steuer- und/oder Auswerteroutine beliebig vorgegeben werden.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1: multifunktionales Personalisierungssystem
- 2: Tischgehäusemodul
- 2': Innenraum
- 2.1: Gehäusefrontbereich
- 2.2: Gehäuserückenbereich
- 2.3: Gehäusebodenbereich
- 2.4, 2.4': Gehäusedeckelelement(e)
- 2.5: Gehäuseseitenbereich
- 2.6: Gehäuseseitenbereich
- 3, 3', 3", 3"': Standbeine
- 4: Kartenaufnahmeeinheit
- 4': Magazin- bzw. Kassettenmodul
- 5: Bedienungsmodul
- 6: Anzeigeeinheit
- 7: Kartenausgabeeinheit
- 8: Kartentransporteinheit
- 8.1: Transportband
- 8.2: Servomotoreinheit
- 8.3: Transportschlittenelement
- 8.4: Wendeeinrichtung
- 8.5: weitere Servomotoreinheit
- 9: erster Aufnahmeraum
- 10: zweiter Aufnahmeraum
- 11.1 - 11.N: Prozessmodule
- 12: Steuer- und Auswerteraum
- 13: Steuereinheit
- 14: Anschlusseinheiten
- TA: Transportachse
- E: Bearbeitungsebene
- FR1: erste Förderrichtung
- FR2: zweite Förderrichtung

## Patentansprüche

1. Multifunktionales Personalisierungssystem (1) zum Personalisieren von Identifikations- bzw. Zugangselementen, insbesondere von kontaktlosen und/oder kontaktbehafteten Kartenelementen, mit mehreren zur Durchführung unterschiedlicher Personalisierungs- und/oder Kontrollprozessen ausgebildeten Prozessmodulen (11.1 -1 1.N), zumindest einer Steuereinheit (13), einer Kartenaufnahmeeinheit (4), einer Kartentransporteinheit (8) und einer Kartenausgabeeinheit (7), wobei die Kartentransporteinheit (8) eine erste Förderrichtung (FR1) und eine entgegengesetzt zur ersten Förderrichtung (FR1) gerichtete zweite Förderrichtung (FR2) aufweist, **dadurch gekennzeichnet, dass** die Prozessmodule (11.1 -11.N) beidseitig entlang der Kartentransporteinheit (8) angeordnet sind, dass die Kartentransporteinheit (8) zur ein- und/oder mehrfachen beidseitigen Zuführung zumindest eines Identifikations- bzw. Zugangselementes an einzelne Prozessmodule (11.1 -11.N) ausgebildet ist, wobei die Reihenfolge der Zuführung des Identifikations- bzw. Zugangselementes an die einzelnen Prozessmodule (11.1 -11.N) unabhängig von der Anordnung der Prozessmodule (11.1 -11.N) entlang der Kartentransporteinheit (8) erfolgt.

2. Multifunktionales Personalisierungssystem nach Anspruch 1, **dadurch gekennzeichnet, dass** die Reihenfolge der Zuführung an alle oder beliebig ausgewählte Prozessmodule (11.1 -11.N) individuell steuerbar ist.

3. Multifunktionales Personalisierungssystem nach Anspruch 1 oder 2, **dadurch gekennzeichnet, dass** die Kartentransporteinheit (8) zur linearen Förderung des vereinzelten Identifikations- bzw. Zugangselementes entlang einer Transportachse (TA) in der ersten und zweiten Förderrichtung (FR1, FR2) ausgebildet ist.

4. Multifunktionales Personalisierungssystem nach einem der Ansprüche 1 bis 3, **dadurch gekennzeichnet, dass** die Kartentransporteinheit (8) eine Wendeeinrichtung zum Wenden des vereinzelten Identifikations- bzw. Zugangselementes aufweist.

5. Multifunktionales Personalisierungssystem nach einem der Ansprüche 1 bis 4, **dadurch gekennzeichnet, dass** die Prozessmodule (11.1 -11.N) parallel zur Transportachse (TA) in einer Bearbeitungsebene (E) angeordnet sind.

6. Multifunktionales Personalisierungssystem nach einem der Ansprüche 1 bis 5, **dadurch gekennzeichnet, dass** die Kartentransporteinheit (8) ein Transportband (8.1) mit einem Transportschlittenelement (8.3) aufweist.

7. Multifunktionales Personalisierungssystem nach Anspruch 6, **dadurch gekennzeichnet, dass** das Transportschlittenelement (8.3) zur Aufnahme des Identifikations- bzw. Zugangselementes ausgebildet ist.

8. Multifunktionales Personalisierungssystem nach Anspruch 7, **dadurch gekennzeichnet, dass** die Kartentransporteinheit (8) zumindest eine Servomotoreneinheit (8.2, 8.5) zum Antrieb des Transportbandes (8.1) und der Wendeeinrichtung (8.4) aufweist.

9. Multifunktionales Personalisierungssystem nach Anspruch 7, **dadurch gekennzeichnet, dass** die Kartentransporteinheit (8) zur getakteten Zuführung des vereinzelten Identifikations- bzw. Zugangselementes an die Prozessmodule (11.1 - 11.N) ausgebildet ist.

10. Multifunktionales Personalisierungssystem nach einem der Ansprüche 1 bis 9, **dadurch gekennzeichnet, dass** das multifunktionale Personalisierungssystem (1) in ein Tischgehäusemodul (2) mit einem Innenraum (2') integriert ist.

11. Multifunktionales Personalisierungssystem nach Anspruch 10, **dadurch gekennzeichnet, dass** der Innenraum (2') des Tischgehäusemoduls (2) durch die Kartentransporteinheit (8) in einen ersten und zweiten Aufnahmeraum (9,10) zur Aufnahme der Prozessmodule (11.1 - 11.N) unterteilt ist.

12. Multifunktionales Personalisierungssystem nach Anspruch 11, **dadurch gekennzeichnet, dass** in dem zumindest ersten und zweiten Aufnahmeraum (9, 10) Führungs- und/oder Fixierelemente zur Befestigung der Prozessmodule (11.1 - 11.7) vorgesehen sind.

13. Multifunktionales Personälisierungssystem nach Anspruch 12, **dadurch gekennzeichnet, dass** die Prozessmodule (11.1 - 11.N) zu den Führungs- und/oder Fixierelementen kompatible Anschlusselemente aufweisen.

14. Multifunktionales Personalisierungssystem nach einem der vorhergehenden Ansprüche, **dadurch gekennzeichnet, dass** die Kartenaufnahmeeinheit (4) zur Aufnahme einer Vielzahl von Identifikations- bzw. Zugangselementen ein Magazin- bzw. Kassettenmodul (4') aufweist.

15. Multifunktionales Personalisierungssystem nach einem der vorhergehenden Ansprüche, **dadurch gekennzeichnet, dass** im Tischgehäusemodul (2) oder in der Kartenaufnahmeeinheit (4) ein Kartenvereinzelungsmodul vorgesehen ist.

16. Multifunktionales Personalisierungssystem nach einem der vorhergehenden Ansprüche, **dadurch gekennzeichnet, dass** die Prozessmodule (11.1 - 11.N) als Magnetstreifen-Codiermodul, Thermotransferdruckermodul, Chip-Codiermodul, Dye-Sublimationsdruckmodul, Lasermodul, Laminiermodul, optisches Verifikationsmodul oder als ein eine Kombination der genannten Funktionen realisierendes Prozessmodul ausgebildet sind.

17. Multifunktionales Personalisierungssystem nach einem der vorhergehenden Ansprüche, **dadurch gekennzeichnet, dass** im Tischgehäusemodul (2) oder in der Kartenausgabeeinheit (7) ein Gut- und Schlechtkartensortierungsmodul vorgesehen ist.

18. Verfahren zur Zuführung von zumindest einem Identifikations- bzw. Zugangselement, insbesondere von kontaktlosen und/oder kontaktbehafteten Kartenelementen, an mehrere in einem multifunktionalen Personalisierungssystem (1) gemäß einem der vorhergehenden Ansprüche vorgesehene Prozessmodule (11.1 -11.N), **dadurch gekennzeichnet, dass** mittels einer zentral im multifunktionalen Personalisierungssystem (1) angeordneten Kartentransporteinheit (8) das zumindest eine Identifikations- bzw. Zugangselement an einzelne beidseitig entlang der Kartentransporteinheit (8) angeordnete Prozessmodule (11.1 -11.N) ein- und/oder mehrfach zugeführt wird, wobei die Reihenfolge der Zuführung des Identifikations- bzw. Zugangselementes an die einzelnen Prozessmodule (11.1 -11.N) unabhängig von der Anordnung der Prozessmodule (11.1 -11.N) entlang der Kartentransporteinheit (8) erfolgt.

## Claims

1. Multi-functional personalisation system (1) for personalising identification and access elements, more particularly contactless and/or contact card elements, with several process modules (11.1 - 11.N) designed for carrying out different personalisation and/or control processes, at least one control unit (13), one card receiving unit (4), one card transport unit (8) and one card output unit (7) wherein the card transport unit (8) has a first conveyor direction (FR1) and a second conveyor direction (FR2) aligned opposite to the first conveyor direction (FR1), **characterised in that** the process modules (11.1 - 11.N) are arranged on either side along the card transport unit (8), that the card transport unit (8) is designed for a single and/or multiple feeding on both sides of at least one identification or access element to individual process modules (11.1 - 11.N) wherein the sequence of feeding the identification or access element to the individual process modules (11.1 - 11.N) takes place independently of the arrangement of the process modules (11.1 - 11.N) along the card transport unit (8).

2. Multi-functional personalisation system according to claim 1 **characterised in that** the sequence of the feeding to all or any selected process modules (11.1-11.N) can be individually controlled.

3. Multifunctional personalisation system according to claim 1 or 2 **characterised in that** the card transport unit (8) is designed for the linear feeding of the separated identification or access element along a transport axis (TA) in the first and second conveyor direction (FR1, FR2).

4. Multifunctional personalisation system according to one of claims 1 to 3 **characterised in that** the card transport unit (8) has a turning device for turning the separate identification or access element.

5. Multifunctional personalisation system according to one of claims 1 to 4 **characterised in that** the process modules (11.1 - 11.N) are arranged parallel to the transport axis (TA) in one processing plane (E).

6. Multifunctional personalisation system according to one of claims 1 to 5 **characterised in that** the card transport unit (8) has a transport belt (8.1) with a transport slide element (8.3).

7. Multifunctional personalisation system according to claim 6 **characterised in that** the transport slide element (8.3) is designed for receiving the identification or access element.

8. Multifunctional personalisation system according to claim 7 **characterised in that** the card transport unit (8) has at least one servo motor unit (8.2, 8.5) for driving the transport belt (8.1) and the turning device (8.4).

9. Multifunctional personalisation system according to claim 7 **characterised in that** the card transport unit (8) is designed for the cyclical feeding of the separated identification or access element to the process modules (11.1 - 11.N).

10. Multifunctional personalisation system according to one of claims 1 to 9 **characterised in that** the multifunctional personalisation system (1) is integrated into a table housing module (2) having an interior chamber (2'.).

11. Multifunctional personalisation system according to claim 10 **characterised in that** the interior chamber (2') of the table housing module (2) is divided by the card transport unit (8) into a first and a second receiving chamber (9,10) for receiving the process modules (11.1 - 11.N).

12. Multifunctional personalisation system according to claim 11 **characterised in that** guide and/or fastening elements for fastening the process modules (11.1 - 11.N) are provided in the at least first and second receiving chamber (9,10).

13. Multifunctional personalisation system according to claim 12 **characterised in that** the process modules (11.1-11.N) have compatible connector elements for the guiding and/or fastening elements.

14. Multifunctional personalisation system according to one of the preceding claims **characterised in that** the card receiving unit (4) has a magazine or cassette module (4') for receiving a number of identification or access elements.

15. Multifunctional personalisation system according to one of the preceding claims **characterised in that** a card separating module is provided in the table housing module (2) or in the card receiving unit (4).

16. Multifunctional personalisation system according to one of the preceding claims **characterised in that** the process modules (11.1 - 11.N) are designed as magnetic strip coding modules, thermo transfer printer modules, chip coding modules, dye sublimation printing modules, laser modules, laminating modules, optical verification modules, or as a process module implementing any combination of the said functions.

17. Multifunctional personalisation system according to one of the preceding claims **characterised in that** a good bad card sorting module is provided in the table housing module (2) or in the card output unit (7).

18. Method for supplying at least one identification or access element, more particularly contactless and/or contact card elements to several process modules (11.1 - 11.N) provided in a multifunctional personalisation system (1) according to one of the preceding claims **characterised in that** by means of a card transport unit (8) mounted centrally in the multifunctional personalisation system (1) the at least one identification or access element is fed singly and/or multiply to individual process modules (11.1 - 11.N) mounted either side along the card transport unit (8) wherein the sequence of the feeding of the identification or access element to the individual process modules (11.1 - 11.N) takes place

## Revendications

1. Système de personnalisation multifonctionnel (1) pour personnaliser des éléments d'identification ou d'accès, en particulier des éléments de carte sans contact et/ou avec contact, comprenant plusieurs modules de processus (11.1 à 11.N) formés pour exécuter différents processus de personnalisation et/ou de contrôle, aumoins une unité de commande (13), une unité réceptrice de carte (4), une unité de transport de carte (8) et une unité de sortie de carte (7), dans lequel l'unité de transport de carte (8) présente un premier sens d'acheminement (FR1) et un second sens d'acheminement (FR2) opposé au premier sens d'acheminement (FR1), **caractérisé en ce que** les modules de processus (11.1 à 11.N) sont agencés des deux côtés le long de l'unité de transport de carte (8), l'unité de transport de carte (8) est conformée pour acheminer de part et d'autre, une et/ou plusieurs fois, au moins un élément d'identification ou d'accès à des modules de processus individuels (11.1 à 11 .N), l'ordre d'acheminement de l'élément d'identification ou d'accès aux modules de processus individuels (11.1 à 11.N) étant indépendant de l'agencement des modules de processus (11.1 -11 .N) le long de l'unité de transport de carte (8).

2. Système de personnalisation multifonctionnel selon la revendication 1, **caractérisé en ce que** l'ordre d'acheminement à la totalité ou à l'un quelconque des modules de processus choisis (11.1 à 11.N) peut être commandé individuellement.

3. Système de personnalisation multifonctionnel selon la revendication 1 ou 2, **caractérisé en ce que** l'unité de transport de carte (8) est conformée pour l'acheminement linéaire de l'élément d'identification ou d'accès individuel le long d'un axe de transport (TA) dans les premier et second sens d'acheminement (FR1, FR2).

4. Système de personnalisation multifonctionnel selon l'une quelconque des revendications 1à3, **caractérisé en ce que** l'unité de transport de carte (8) présente un dispositif tournant pour faire tourner l'élément d'identification ou d'accès individuel.

5. Système de personnalisation multifonctionnel selon l'une quelconque des revendications 1à4, **caractérisé en ce que** les modules de processus (11.1 à 11. N) sont agencés parallèlement à l'axe de transport (TA) dans un plan de traitement (E).

6. Système de personnalisation multifonctionnel selon l'une quelconque des revendications 1à5, **caractérisé en ce que** l'unité de transport de carte (8) présente une bande de transport (8.1) avec un coulisseau de transport (8.3).

7. Système de personnalisation multifonctionnel selon la revendication 6, **caractérisé en ce que** le coulisseau de transport (8.3) est conformé pour la réception de l'élément d'identification ou d'accès.

8. Système de personnalisation multifonctionnel selon la revendication 7, **caractérisé en ce que** l'unité de transport de carte (8) présente au moins une unité de servomoteur (8.2, 8.5) pour entraîner la bande de transport (8.1) et le dispositif tournant (8.4).

9. Système de personnalisation multifonctionnel selon la revendication 7, **caractérisé en ce que** l'unité de transport de carte (8) est conformée pour l'acheminement cadencé de l'élément d'identification ou d'accès individuel aux modules de processus (11.1 à 11.N).

10. Système de personnalisation multifonctionnel selon l'une quelconque des revendications 1 à 9, **caractérisé en ce que** le système de personnalisation multifonctionnel (1) est intégré à un module de boîtier de table (2) ayant un espace interne (2').

11. Système de personnalisation multifonctionnel selon la revendication 10, **caractérisé en ce que** l'espace interne (2') du module de boîtier de table (2) est subdivisé par l'unité de transport de carte (8) en un premier et un second espace de réception (9,10) pour recevoir les modules de processus (11.1 à 11.N).

12. Système de personnalisation multifonctionnel selon la revendication 11, **caractérisé en ce que**, dans les au moins premier et second espaces de réception (9, 10), on prévoit des éléments de guidage et/ou de fixation pour fixer les modules de processus (11.1 à 11.7).

13. Système de personnalisation multifonctionnel selon la revendication 12, **caractérisé en ce que** les modules de processus (11.-1 à 11.N) présentent des éléments de raccordement compatibles avec les éléments de guidage et/ou de fixation.

14. Système de personnalisation multifonctionnel selon l'une quelconque des revendications précédentes, **caractérisé en ce que** l'unité de réception de carte (4) présente un module de magasin ou de cassette (4') pour recevoir une pluralité d'éléments d'identification ou d'accès.

15. Système de personnalisation multifonctionnel selon l'une quelconque des revendications précédentes, **caractérisé en ce qu'**il est prévu, dans le module de boîtier de table (2) ou dans l'unité de réception de carte (4), un module d'individualisation de carte.

16. Système de personnalisation multifonctionnel selon l'une quelconque des revendications précédentes, **caractérisé en ce que** les modules de processus (11.1 à 11.N) se présentent sous la forme d'un module de codage à bande magnétique, d'un module d'impression à thermotransfert, d'un module de codage à puce, d'un module d'impression à sublimation de colorant, d'un module à laser, d'un module de laminage, d'un module de vérification optique ou d'un module de processus effectuant une combinaison des fonctions citées.

17. Système de personnalisation multifonctionnel selon l'une quelconque des revendications précédentes, **caractérisé en ce qu'**il est prévu, dans le module de boîtier de table (2) ou dans l'unité de sortie de carte (7), un module de tri de bonnes et de mauvaises cartes.

18. Procédé d'acheminement d'au moins un élément d'identification ou d'accès, en particulier d'éléments de carte sans contact et/ou avec contact, à plusieurs modules de processus (11.1 à 11.N) prévus dans un système de personnalisation multifonctionnel (1) selon l'une quelconque des revendications précédentes, **caractérisé en ce qu'**au moyen d'une unité de transport de carte (8) agencée centralement dans le système de personnalisation multifonctionnel (1), le au moins un élément d'identification ou d'accès est acheminé, une et/ou plusieurs fois, à des modules de processus (11. 1 à 11.N) individuels agencés des deux côtés le long de l'unité de transport de carte (8), l'ordre d'acheminement de l'élément d'identification ou d'accès aux modules de processus individuels (11.1 à 11.N) étant indépendant de l'agencement des modules de processus (11.1 à 11.N) le long de l'unité de transport de carte (8).
